# EUROPÄISCHE PATENTSCHRIFT

(11) **EP 1 927 093 B1**
(45) Veröffentlichungstag und Bekanntmachung des Hinweises auf die Patenterteilung: **30.04.2014**
(21) Anmeldenummer: 06753187.1
(22) Anmeldetag: 20.05.2006
(51) Int. Cl.: G08G 1/16, G06T 7/00, G06K 9/00

(54) **Verfahren und Vorrichtung zur Erkennung von Fahrspurmarkierungen**
Method of and apparatus for detecting lane markings
Procédé et dispositif d'identification de marquages au sol

(30) Priorität: 20.09.2005 DE 102005044979
(43) Veröffentlichungstag der Anmeldung: 04.06.2008
(73) Patentinhaber: ADC Automotive Distance Control Systems GmbH, 88131 Lindau (DE)
(72) Erfinder: FECHNER, Thomas, 88079 Kressbronn (DE); HEINRICH, Stefan, 77855 Achern (DE); ULBRICHT, Dirk, 88239 Wangen (DE)
(74) Vertreter: Büchner, Jörg
(86) Internationale Anmeldenummer: PCT/DE2006/000871
(87) Internationale Veröffentlichungsnummer: WO 2007/033627

(56) Entgegenhaltungen:
- EP-A- 1 667 086
- PATENT ABSTRACTS OF JAPAN Bd. 1997, Nr. 04, 30. April 1997 (1997-04-30) -& JP 08 320997 A (NISSAN MOTOR CO LTD), 3. Dezember 1996 (1996-12-03)
- PATENT ABSTRACTS OF JAPAN Bd. 2003, Nr. 12, 5. Dezember 2003 (2003-12-05) -& JP 2004 310522 A (TOYOTA MOTOR CORP), 4. November 2004 (2004-11-04)

## Beschreibung

Die Erfindung bezieht sich auf ein Verfahren und eine Vorrichtung zur Fahrspurerkennung. Ein wichtiger Bestandteil von Fahrerassistenzsystemen, die z. B. zur Abstandsregelung oder Spurhaltung eingesetzt werden, ist die Prädiktion der Fahrspur. In der Literatur werden verschiedene Lösungsansätze zu diesem Thema angegeben. DE 10327869 offenbart ein Navigationssystem mit Fahrspurhinweisen, bei dem Straßenkartendaten mit Fahrspurinformationen in einem Speicherelement abgelegt und zusätzlich die Straße vor dem Kraftfahrzeug erfasst wird. Die Datensätze werden zur Positions- und Fahrspurbestimmung des Kraftfahrzeugs verglichen.

Alternativ werden häufig Kamerasysteme zur Fahrspurfindung eingesetzt. Es wird z. B. in DE 102004003502 ein Verfahren und Vorrichtung zum Assistieren beim Führen eines Kraftfahrzeugs vorgestellt. Die Fahrzeugumgebung wird mit einer Kamera aufgenommen. Zur Auswertung der Bilddaten werden vorgegebene Suchfenster benutzt, in denen Fahrbahnmarkierung detektiert werden. Die Maximalanzahl der verfügbaren Suchfenster wird situationsbedingt ermittelt. Dieses Vorgehen bietet den Vorteil, dass auch bei einer Kurvenfahrt oder einem Fahrspurwechsel eine Fahrspur weiterhin erkannt werden kann.

JP 2004 310522 A zeigt eine Fahrzeugkamera mit einer Bildverarbeitungsvorrichtung, die anhand einer Kantenerkennung Markierungen zur Einteilung von Fahrspuren erkennt.

JP 08 320997 A zeigt eine Vorrichtung und ein Verfahren zur Erkennung von Fahrbahnmarkierungen und Fahrspuren nach dem Oberbegriff des Anspruchs 1.

Es ist eine Aufgabe der hier vorliegenden Erfindung, die Fahrspur eines Kraftfahrzeugs schnell und zuverlässig zu erkennen.

Die Aufgabe wird erfinderisch gemäß den unabhängigen Patentansprüchen gelöst. Die abhängigen Unteransprüche zeigen vorteilhafte Ausführungsformen und Weiterentwicklungen der Erfindung auf.

Für eine kamerabasierte Fahrspurfindung eines Fahrzeugs werden die Bilddaten mit einem dafür geeigneten Auswerteverfahren (Algorithmus) analysiert. Für ein schnelles und sicheres Auffinden der Fahrspur ist es von Vorteil, die Markierungsart zu kennen. Z. B. wird in Deutschland bevorzugt eine in periodischen Abständen unterbrochene weiße Line als Fahrspurmarkierung verwendet, wohingegen in den USA häufig punktförmige, erhabenen Spurmarkierungen, sog. Bot Dots, anzutreffen sind. Ist die Art der Fahrspurmarkierung bekannt, die aktuell die Fahrspur des Fahrzeugs begrenzt, kann in den Bilddaten gezielt nach dem Vorhandensein von Objekten mit einer vorgegeben Form und einem vorgegebenen Abstand gesucht werden.

Dazu wird ein Verfahren zur Erkennung von Fahrspurmarkierungen für ein bewegtes Kraftfahrzeug mit einer Bildaufnahmeeinheit angegeben. Die Bildaufnahmeeinheit ist auf die Fahrbahn vor dem Fahrzeug gerichtet. Die aufgenommenen Bilddaten werden auf Helligkeitsunterschiede (Kontraste) hin analysiert und/oder es werden Kanten im Bild extrahiert. Kennzeichnend für Fahrbahnmarkierungen ist ihre periodische Anordnung auf der Fahrbahn. Im Bild wird eine 3 dimensionale Szene aus der Fahrzeugumgebung zweidimensional abgebildet. D.h. äquidistante Objekte in der Umgebung werden nicht zwangsläufig auch äquidistant im Bild dargestellt. Deshalb werden zur Auswertung die Bilddaten zunächst in ein anderes Koordinatensystem transformiert, das die beschriebene perspektivisch verzerrte Darstellung der Umgebung im Bild ausgleicht. Diese Hilfsfunktion wird auf periodisch wiederkehrende Objekte hin untersucht. Dazu wird in Abhängigkeit von der Blickrichtung und Abbildungseigenschaften der Bildaufnahmeeinheit eine Hilfsfunktion mit räumlich äquidistanten Messpunkten in der Fahrzeugumgebung bzw. auf der Fahrbahn interpoliert.

In einer bevorzugten Ausgestaltung der Erfindung wird die berechnete bzw. interpolierte Hilfsfunktion auf periodische Helligkeitsänderungen pro Wegeinheit untersucht. Im Folgenden wird analog zu dem Begriff Frequenz, der sich auf zeitliche Veränderungen bezieht, der Begriff Ortsfrequenz für die Beschreibung *räumlich* variierende Größen benutzt. Das Ortfrequenzspektrum wird mit vorher abgelegten Frequenzmustem von typischen Fahrbahnmarkierungen verglichen. Dabei ist es ggf. vorteilhaft nur relevante Frequenzbereiche zu vergleichen. Anhand der Übereinstimmung mit einem der vorgegeben Frequenzmuster wird die Art der Fahrspurmarkierung (unterbrochene Linie, Bot Dots, etc.) erkannt.

In einer weiteren Ausgestaltung der Erfindung wird die Hilfsfunktion des Helligkeitsverlaufs im Zeitbereich ausgewertet. Mit Hilfe von Korrelationsverfahren kann nach den speziellen Signaturen der typischen Markierungsarten gesucht werden. Dazu werden die Bilddaten oder das zeitabhängige Hilfssignal mit einem vorgegeben, für eine bestimmte Markierungsart typischen Signalverlauf korreliert, d.h. es wird entweder eine Faltung der beiden Signale oder eine Kreuzkorrelation durchgerührt. Anhand des Ergebnisses kann die Ähnlichkeit der beiden Signale ermittelt und somit entschieden werden, ob es sich um die vorgegebene Markierungsart handelt oder nicht. In der Auswertung muss die Eigengeschwindigkeit des Fahrzeugs eingehen, da die ermittelte Frequenz von der Geschwindigkeit abhängt und deshalb nur Signalverläufe verglichen werden können, die bei ähnlichen Geschwindigkeiten bestimmt wurden. Das Kreuzkorrelationsverfahren liefert ein normiertes Ergebnis, wohingegen das Ergebnis einer Faltung nicht normiert ist und somit ein adaptives Entscheidungsverfahren, ob es sich um die vorgegebene Markierungsart handelt, vorzusehen ist.

Eine Fahrspurmarkierungserkennung mittels Korrelation des gemessenen Helligkeitsverlaufs mit einem für eine Markierungsart typischen Verlauf wird in einer speziellen Ausgestaltung der Erfindung ganz analog zu dem zuvor beschrieben Verfahren im Raumbereich anstatt im Zeitbereich durchgeführt.

In einer vorteilhaften Ausgestaltung der Erfindung wird nur in vorgegebenen Bereichen des Bildes nach Kontrastunterschieden und damit Fahrbahnmarkierungen gesucht. Die vorgegebenen Bereiche sind so angeordnet, dass sie den modellhaft angenommenen Spurverlauf begrenzen.

Weitere Verfahrensschritte zur Prüfung des erhaltenen Resultats und zur Vermeidung von Auswertefehlern werden in den folgenden vorteilhaften Ausführungsformen der Erfindung angegeben. Fälschlicherweise erkannte Fahrbahnmarkierungen erschweren die Spurerkennung. "Falsche Fahrbahnmarkierungen" können durch Schmutz, Texturen oder Spiegelbilder der Fahrbahnmarkierungen z. B. auf nasser Fahrbahn im betrachteten Bildausschnitt entstehen.

In einer besonderen Ausführungsform der Erfindung wird im Bild für jeweils einzelne Segmente (Bildausschnitte) entlang der identifizierten Fahrspurmarkierungen ein Frequenzspektrum des Helligkeitsverlaufs ermittelt. Das Frequenzspektrum wird durch eine Frequenzanalyse des zeitabhängigen Helligkeitsverlaufs für ein Bildsegment bzw. Bildpunkt ermittelt. Die Frequenzspektren der unterschiedlichen Bildsegmente werden verglichen. Weicht in einem Bildsegment das Frequenzspektrum stark von dem der anderen Segmente ab, so wird das Messsignal in diesem Segment verworfen.

In einer vorteilhaften Ausgestaltung der Erfindung wird im Bild für jeweils einzelne Segmente (Bildausschnitte bzw. Bildpixel) entlang der identifizierten Fahrspurmarkierungen ein Helligkeitsverlauf ermittelt. Markierungslinien sind üblicherweise durch periodische Strukturen in Fahrtrichtung repräsentiert. Neben der örtlichen Periodizität tritt im Fahrbetrieb aber auch eine zeitliche Periodizität der Markierungsmesswerte auf. Durch den zeitlichen Wechsel zwischen Markierungsmessung und Markierungslücke entsteht in allen Bildsegmenten der gleiche Helligkeitsverlauf. Durch den Vergleich der Helligkeitsverläufe durch eine Kreuzkorrelation kann die Ähnlichkeit der Helligkeitsverläufe ermittelt werden. Sollte der Helligkeitsverlauf in einem bestimmten Bildsegment nicht mit den übrigen Helligkeitsverläufen übereinstimmen, wird er verworfen.

In einer weiteren Ausgestaltung der Erfindung wird zur Identifizierung von Auswertefehlern der zeitabhängige Helligkeitsverlauf in den einzelnen Bildsegmenten unter Berücksichtigung der Eigengeschwindigkeit mit vorgegebenen Helligkeitsverläufen verglichen. Gemessenes und vorgegebenes Signal können nur miteinander verglichen werden, wenn beide bei der gleichen Fahrzeuggeschwindigkeit aufgenommen bzw. simuliert wurden. Der Vergleich wird mittels Korrelation oder Frequenzanalyse und anschließendem Vergleich der Spektren durchgeführt. Beide Auswerteverfahren wurden unmittelbar zuvor beschrieben. Die vorgegeben Helligkeitsverläufe entsprechen denen typischer Fahrspurmarkierungen. Zeit der aufgenommene Helligkeitsverlauf in einem Bildsegment keine Ähnlichkeit mit einem der vorgegebenen Helligkeitsverläufen auf, wird dieses Messsignal verworfen.

In einer vorteilhaften Ausgestaltung der Erfindung werden zur Vermeidung von Auswertefehlern nur Objekte als Fahrbahnmarkierungen erkannt werden, die entlang einer Gerade oder eines Bogens angeordnet sind. Diese Anordnung entspricht dem typischen Verlauf von Fahrspurmarkierungen.

Die Bewegungsrichtung der als Fahrbahnmarkierung erkannten Objekte wird in einer besonderen Ausführungsform der Erfindung in nacheinander aufgenommenen Bildern untersucht. Die Bewegungsrichtung "echter" Fahrspurmarkierungen stimmt bei einem zumindest nahezu geradlinigen Verlauf der Fahrbahn bzw. im Nahbereich vor dem Fahrzeug im Wesentlichen überein. Messwerte von Objekten, die von der Bewegungsrichtung anderer Markierungen wesentlich abweichen, werden verworfen.

In einer vorteilhaften Ausgestaltung der Erfindung wird die Bewegungsrichtung und/oder Bewegungsgeschwindigkeit der als Fahrbahnmarkierung erkannten Objekte in nacheinander aufgenommenen Bildern untersucht und mit einem erwarteten Verlauf verglichen. Der erwartete Verlauf wird in Abhängigkeit der Eigengeschwindigkeit des Fahrzeugs und ggf. von der Markierungsart (unterbrochene Linie, Bot Dots, etc.) bestimmt. Objekte, die von diesem erwarteten Verlauf abweichend, werden verworfen.

Zudem wird eine Vorrichtung mit einer Bildaufnahmeeinheit und einer Steuereinheit mit einer hinterlegten Programmierung zur Durchführung eines wie oben beschriebenen Verfahrens vorgestellt., Referenzdaten zu bekannten Fahrspurmarkierungen und eine Programmierung zur Durchführung eines wie oben beschriebenen Verfahrens sind auf der Steuereinheit hinterlegt.

Die Erfindung wird nachfolgend anhand eines Ausführungsbeispiels und 2 Abbildungen näher beschrieben.
Fig.1: Abtastung der Fahrbahn durch die Bildzeilen einer Kamera
Fig.2 : Zeitlicher Verlauf von Fahrspurmarkierungen

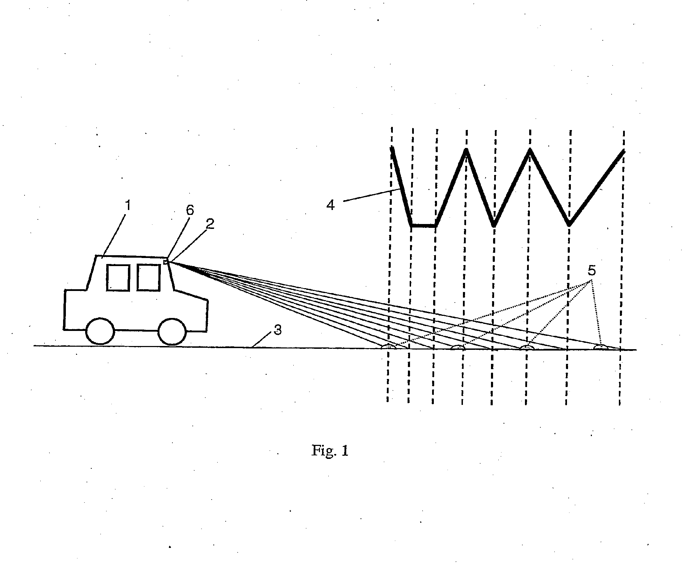

Das dargestellte Verfahren zur Fahrspurerkennung nutzt speziell die periodischen Eigenschaften von Spurmarkierungen. Periodische Eigenschaften lassen sich besonders vorteilhaft nach einer Transformation des Signals in den Frequenzbereich untersuchen. Der Begriff Frequenz ist hier aber abstrakt zu sehen, da sich das Signal der Markierungen nicht mit der Zeit sondern mit dem zurückgelegten Weg periodisch wiederholt. In diesem Fall spricht man anstatt von der Frequenz, die auf die Zeit bezogen ist, von einer Orts- oder Raumfrequenz. Um gängige Methoden der Transformation in den Frequenzbereich zu verwenden, ist eine räumlich äquidistante Abtastung des Messsignals nötig. Eine direkte räumlich äquidistante Abtastung der Fahrbahn ist mit einem Kamerabild nicht möglich, da digitale Bilder aus Pixeln bestehen, die auf dem Bildchip äquidistant angeordnet sind. Die Projektion der Pixel auf die Fahrbahn führt aber nicht zu einer äquidistanten Abtastung der Fahrbahn, da der Bildaufnehmer in der Regel nicht direkt auf die Fahrbahn gerichtet ist. Dies ist auch in Fig. 1 dargestellt. Ein Bildaufnehmer ist in einem Kraftfahrzeug 1 so angeordnet, dass eine Szene auf der Fahrbahn 3 vor dem Kraftfahrzeug 1 aufgenommen wird. Die fächerartig angeordneten Linien 2 zeigen die Projektion der Zeilen des Bildchips auf der Fahrbahn 3. Die Abstände zwischen benachbarten Schnittpunkten mit der Fahrbahn nehmen mit zunehmender Entfernung zu. Die Fahrbahn 3 wird somit nicht äquidistant abgetastet. Für den Verlauf der Bildhelligkeit ergibt sich für eine kontrastäquivalente Hilfsfunktion 4 im Bereich des Fahrspurrandes der im Bild dick schwarz dargestellte Verlauf. Um ein räumlich äquidistant abgetastetes Signal zu erhalten, muss eine weitere Hilfsfunktion mit äquidistanten und diskreten Signalwerten interpoliert werden.

Dieses Hilfssignal wird auf spektrale Anteile untersucht; es erzeugen
o durchgezogene Linien einen hohen Gleichanteil,
o unterbrochene Linien einen niedrigeren Gleichanteil und einen niederfrequenten Spektralanteil und
o gepunktete Linien einen vergleichsweise höherfrequenten Spektralanteil.

Jede Markierungsart 5 erzeugt also ein charakteristisches Frequenzspektrum, die in dem hier vorgestellten Verfahren zur Identifizierung von Fahrspurmarkierungen genutzt wird. Vorteilhaft an diesem Verfahren zur Fahrspurerkennung ist, dass mit einem Bildaufnehmer ein großer Vorausschaubereich ausgewertet wird und so schneller Ergebnisse erzielt werden können als z.B. bei einer Signalauswertung mit nur einem Strahlungsempfänger.

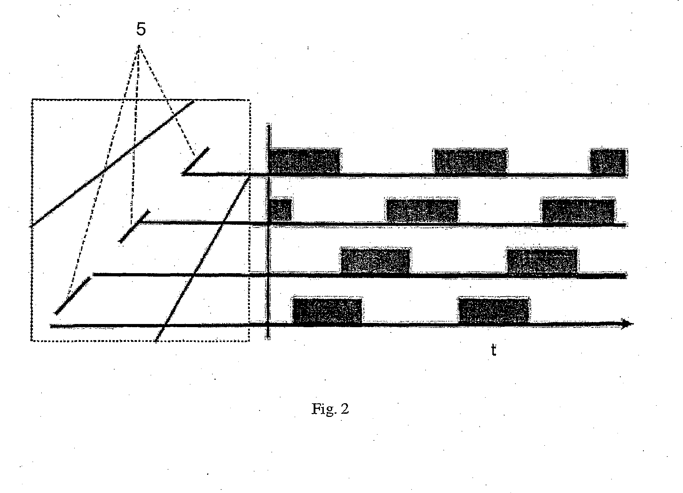

Um Auswertefehler bei der Fahrspurerkennung zu vermeiden wird zusätzlich zu dem oben genannten Verfahren die zeitliche Periodizität von Fahrspurbegrenzungslinien geprüft. Markierungslinien 5 werden üblicherweise durch periodische Strukturen in Fahrtrichtung repräsentiert. Neben der örtlichen Periodizität tritt im Fahrbetrieb aber auch eine zeitliche Periodizität der Markierungsmesswerte auf. In Figur 2 ist dargestellt, dass die Wiederholfrequenz, mit der Fahrbahnmarkierungen in Bildsegmenten entlang des Fahrspurrandes detektiert werden, unabhängig von der Entfernung der Fahrspurmarkierung zum Fahrzeug ist. Dazu ist rechts in Fig. 2 der zeitliche Verlauf des Messsignals an bestimmten Bildpunkten wiedergegeben. Weicht die Wiederholfrequenz also in einem Bildsegment stark von der in anderen Bildsegmenten bestimmten Wiederholfrequenz ab, wird das Messsignal in diesem Bildsegment verworfen.

## Patentansprüche

1. Verfahren zur Erkennung von Fahrspurmarkierungen (5) für ein bewegtes Kraftfahrzeug (1) mit einer Bildaufnahmeeinheit, wobei die Bildaufnahmeeinheit (6) auf die Fahrbahn (3) vor dem Fahrzeug gerichtet ist, und in den aufgenommenen Bilddaten Helligkeitsunterschiede (Kontraste) analysiert und/oder Kanten extrahiert werden,
wobei Fahrspurmarkierungen (5) anhand ihrer periodischen Anordnung auf der Fahrbahn (3) erkannt werden, wobei zur Auswertung das Messsignal der Bildaufnahmeeinheit (6) in ein anderes Koordinatensystem transformiert und die so erhaltene Hilfsfunktion auf Periodizität hin untersucht wird,
**dadurch gekennzeichnet, dass**
in Abhängigkeit von der Blickrichtung der Bildaufnahmeeinheit (6) eine Hilfsfunktion mit räumlich äquidistanten Messpunkten auf der Fahrbahn interpoliert wird.

2. Verfahren nach Anspruch 1,
**dadurch gekennzeichnet, dass**
die Hilfsfunktion auf periodische Helligkeitsänderungen pro Wegeinheit untersucht und anhand der Ortsfrequenz charakterisiert wird.

3. Verfahren nach Anspruch 1,
**dadurch gekennzeichnet, dass**
die Bilddaten oder die Hilfsfunktion im Zeitbereich mittels Korrelation mit einem vorgegebenen Signal oder Frequenzanalyse auf spezielle Signaturen der vorgegebenen Markierungsarten untersucht wird, wobei die Eigengeschwindigkeit des Fahrzeugs berücksichtigt wird.

4. Verfahren nach Anspruch 1,
**dadurch gekennzeichnet, dass**
die Hilfsfunktion im Raumbereich durch eine Kreuzkorrelation oder eine Faltung mit einem vorgegebenen Signal auf spezielle Signaturen der vorgegebenen Markierungsarten untersucht wird.

5. Verfahren nach einem der vorherigen Ansprüche,
**dadurch gekennzeichnet, dass**
nur in vorgegebenen Bereichen des Bildes nach Fahrbahnmarkierungen (5) gesucht wird.

6. Verfahren nach einem der vorherigen Ansprüche,
**dadurch gekennzeichnet, dass**
zur Identifizierung von Auswertefehlern
○ im Bild für jeweils einzelne Segmente (Bildausschnitte) entlang der identifizierten Fahrspurmarkierungen (5) ein Frequenzspektrum des zeitlichen Helligkeitsverlaufs ermittelt wird und
○ die Werte untereinander verglichen werden und
○ bei einer starken Abweichung der Frequenz in einem Segment dieses Messsignal verworfen wird.

7. Verfahren nach einem der Ansprüche 1 bis 4,
**dadurch gekennzeichnet, dass**
zur Identifizierung von Auswertefehlern
○ im Bild für jeweils einzelne Segmente (Bildausschnitte) entlang der identifizierten Fahrspurmarkierungen (5) ein Helligkeitsverlauf ermittelt wird und
○ mittels Korrelation mit den anderen Helligkeitsverläufen verglichen werden und
○ bei einer starken Abweichung in einem Segment dieses Messsignal verworfen wird.

8. Verfahren nach einem der vorherigen Ansprüche 6 oder 7,
**dadurch gekennzeichnet, dass**
zur Identifizierung von Auswertefehlern der Helligkeitsverlauf für jeweils einzelne Bildsegmenten unter Berücksichtigung der Eigengeschwindigkeit mit vorgegebenen Helligkeitsverläufen, die denen typischer Fahrspurmarkierungen entsprechen, mittels Korrelation und Frequenzanalyse verglichen werden, wobei bei einer starken Abweichung des Helligkeitsverlaufs in einem Segment von allen vorgegebenen Signalen das Messsignal verworfen wird.

9. Verfahren nach einem der vorherigen Ansprüche,
**dadurch gekennzeichnet, dass**
zur Identifizierung von Auswertefehlern nur Objekte als Fahrbahnmarkierungen (5) erkannt werden, die entlang einer Gerade oder eines Bogens angeordnet sind.

10. Verfahren nach einem der vorherigen Ansprüche,
**dadurch gekennzeichnet, dass**
eine Bewegungsrichtung der als Fahrbahnmarkierung (5) erkannten Objekte im Bild untersucht werden, wobei Messwerte von Objekten, die von der Bewegungsrichtung anderer Markierungen abweichen verworfen werden.

11. Verfahren nach einem der vorherigen Ansprüche,
**dadurch gekennzeichnet, dass**
eine Bewegungsrichtung und/oder Bewegungsgeschwindigkeit der als Fahrbahnmarkierung (5) erkannten Objekte im Bild untersucht und mit einem prädizierten Verlauf verglichen werden, wobei der prädizierte Verlauf von der Eigengeschwindigkeit der Vorrichtung abhängt, und von diesem Verlauf abweichende Objekte verworfen werden.

12. Vorrichtung mit einer Bildaufnahmeeinheit und einer Steuereinheit mit einer hinterlegten Programmierung zur Durchführung aller Schritte eines Verfahrens nach einem der vorherigen Ansprüche.

13. Kraftfahrzeug mit einer Vorrichtung nach Anspruch 12.

## Claims

1. A method for detecting lane markings (5) for a moving motor vehicle (1) with an image recording unit, wherein the image recording unit (6) is directed at the carriageway (3) in front of the vehicle, and wherein differences in brightness (contrasts) are analysed and/or edges are extracted in the recorded image data, wherein lane markings (5) are detected by reference to their periodic arrangement on the carriageway (3), wherein, for the purpose of evaluation, the measurement signal of the image recording unit (6) is transformed into a different coordinate system and the auxiliary function thus obtained is examined for periodicity,
**characterized in that**
an auxiliary function with equidistant measuring points on the carriageway is interpolated as a function of the viewing direction of the image recording unit (6).

2. The method according to claim 1,
**characterized in that**
the auxiliary function is examined for periodical changes in brightness per distance unit and **characterised by** means of the spatial frequency.

3. The method according to claim 1,
**characterized in that**
the image data or the auxiliary function are examined for specific signatures of the pre-defined types of markings in the temporal domain by way of correlation with a pre-defined signal or frequency analysis, taking the speed of the vehicle into consideration.

4. The method according to claim 1,
**characterized in that**
the auxiliary function is examined for specific signatures of the pre-defined types of markings in the spatial domain by way of cross-correlation or convolution with a pre-defined signal.

5. The method according to any one of the preceding claims,
**characterized in that**
lane markings (5) are searched for only in pre-defined areas of the image.

6. The method according to any one of the preceding claims,
**characterized in that**
for the purpose of identifying evaluation errors
○ a frequency spectrum of the brightness gradient over time is determined in the image for respective individual segments (image sections) along the identified lane markings (5) and
○ the values are compared to each other and
○ the respective measurement signal is discarded if the frequency strongly deviates within a segment.

7. The method according to any one of claims 1 to 4,
**characterized in that**
for the purpose of identifying evaluation errors
○ a brightness gradient is determined in the image for respective individual segments (image sections) along the identified lane markings (5) and
○ is compared to the other brightness gradients by way of correlation and
○ the respective measurement signal is discarded if there is a strong deviation within a segment.

8. The method according to any one of the preceding claims 6 or 7,
**characterized in that**
for the purpose of identifying evaluation errors the brightness gradient for respective individual image segments is compared by way of correlation or frequency analysis and in consideration of the vehicle's speed to pre-defined brightness gradients which correspond to typical lane markings, wherein the respective measurement signal is discarded if there is a strong deviation of the brightness gradient within a segment from all pre-defined signals.

9. The method according to any one of the preceding claims,
**characterized in that**
for the purpose of identifying evaluation errors only those objects are detected as lane markings (5) which are arranged along a straight line or a curve.

10. The method according to any one of the preceding claims,
**characterized in that**
a direction of motion of the objects detected as lane markings (5) within the image is examined, wherein measurement values of objects deviating from the direction of motion of other markings are discarded.

11. The method according to any one of the preceding claims,
**characterized in that**
a direction of motion and/or a speed of motion of the objects detected as lane markings (5) within the image is examined and compared to a predicted course, wherein the predicted course depends on the speed of the device and wherein objects deviating from this course are discarded.

12. A device with an image recording unit and a control unit with a stored programming for performing all steps of a method according to any one of the preceding claims.

13. A motor vehicle with a device according to claim 12.

## Revendications

1. Procédé de détection de marquages de voie (5) pour un véhicule automobile (1) en mouvement avec une unité de prise de vue, l'unité de prise de vue (6) étant dirigée vers la voie (3) devant le véhicule, et, dans les données d'image prises, des différences de brillance (contrastes) étant analysées et/ou des bordes étant extraits,
des marquages de voie (5) étant détectés à l'aide de leur disposition périodique sur la voie (3), le signal de mesure de l'unité de prise de vue (6) étant transformé en un autre système de coordonnées pour l'analyse, et la fonction auxiliaire ainsi obtenue faisant l'objet d'un examen portant sur la périodicité,
**caractérisé en ce que,**
en fonction de la direction de vision de l'unité de prise de vue (6), une fonction auxiliaire est interpolée avec des points de mesure équidistants spatialement sur la voie.

2. Procédé selon la revendication 1,
**caractérisé en ce que**
la fonction auxiliaire fait l'objet d'un examen portant sur des variations de brillance périodiques par unité de déplacement et est caractérisée à l'aide de la fréquence locale.

3. Procédé selon la revendication 1,
**caractérisé en ce que**
les données image ou la fonction auxiliaire fait l'objet, dans la plage temporelle, au moyen de la corrélation avec un signal prédéfini ou d'une analyse de fréquence, d'un examen portant sur des signatures spéciales des types de marquages prédéfinis, la vitesse propre du véhicule étant prise en compte.

4. Procédé selon la revendication 1,
**caractérisé en ce que**
la fonction auxiliaire fait l'objet, dans la plage spatiale, par une corrélation croisée ou une convolution avec un signal prédéfini, d'un examen portant sur des signatures spéciales des types de marquages prédéfinis.

5. Procédé selon une des revendications précédentes,
**caractérisé en ce que**
la recherche de marquages de voie (5) n'est effectuée que dans des plages prédéfinies de l'image.

6. Procédé selon une des revendications précédentes,
**caractérisé en ce que,**
pour l'identification d'erreurs d'analyse,
o un spectre fréquentiel de l'allure de la brillance dans le temps est déterminé dans l'image pour respectivement des segments (fractions d'image) individuels le long des marquages de voie (5) identifiés, et
o les valeurs sont comparées les unes aux autres, et
o ce signal de mesure est rejeté en cas de forte divergence de la fréquence dans un segment.

7. Procédé selon une des revendications 1 à 4,
**caractérisé en ce que**
pour l'identification d'erreurs d'analyse,
o une allure de la brillance dans le temps est déterminée dans l'image pour respectivement des segments (fractions d'image) individuels le long des marquages de voie (5) identifiés, et
o et est comparée aux autres allures de la brillance par corrélation et
o ce signal de mesure est rejeté en cas de forte divergence dans un segment.

8. Procédé selon une des revendications précédentes 6 ou 7,
**caractérisé en ce que,**
pour l'identification d'erreurs d'analyse, l'allure de la brillance pour respectivement des segments d'image individuels, avec prise en compte la vitesse propre, est comparée, par corrélation et analyse de fréquence, avec des allures de la brillance prédéfinies qui correspondent à celles de marquages de voie typiques, le signal de mesure étant rejeté en cas de forte divergence de l'allure de la brillance dans un segment par rapport à tous les signaux prédéfinis.

9. Procédé selon une des revendications précédentes,
**caractérisé en ce que,**
pour l'identification d'erreurs d'analyse, ne sont détectés en tant que marquages de voie (5) que des objets qui sont disposés le long d'une droite ou d'un arc.

10. Procédé selon une des revendications précédentes,
**caractérisé en ce**
**qu'**une direction de déplacement des objets détectés en tant que marquage de voie (5) est examinée, des valeurs de mesure d'objets qui divergent de la direction de déplacement d'autres marquages étant rejetées.

11. Procédé selon une des revendications précédentes,
**caractérisé en ce**
**qu'**une direction de déplacement et/ou une vitesse de déplacement des objets détectés en tant que marquage de voie (5) dans l'image sont examinées et comparées avec une allure prédite, l'allure prédite étant fonction de la vitesse propre du dispositif, et des objets divergents de cette allure étant rejetés.

12. Dispositif avec une unité de prise de vue et une unité de commande avec une programmation enregistrée pour l'exécution de toutes les étapes d'un procédé selon une des revendications précédentes.

13. Véhicule automobile avec un dispositif selon la revendication 12.
